# EUROPÄISCHE PATENTSCHRIFT

(11) **EP 2 693 096 B1**
(45) Veröffentlichungstag und Bekanntmachung des Hinweises auf die Patenterteilung: **20.11.2019**
(21) Anmeldenummer: 13003044.8
(22) Anmeldetag: 14.06.2013
(51) Int. Cl.: F16L 41/08, F16L 41/14

(54) **Stützring und Vorrichtung zur Fixierung eines Rohrs**
Support ring and device for fixing a pipe
Bague d'appui et dispositif destiné à fixer un tuyau

(30) Priorität: 30.07.2012 DE 102012014956
(43) Veröffentlichungstag der Anmeldung: 05.02.2014
(73) Patentinhaber: Felber, Winfried, 86653 Monheim (DE)
(72) Erfinder: Felber, Winfried, 86653 Monheim (DE)
(74) Vertreter: Bergmeier, Werner

(56) Entgegenhaltungen:
- EP-A2- 2 354 619
- EP-B1- 0 975 914

## Beschreibung

Die Erfindung betrifft eine Vorrichtung zur Fixierung eines Rohrs in einem zugeordneten Wanddurchbruch eines Basisteils, vorzugsweise zum Anschließen eines Seitenrohrs eines Rohrsystems, insbesondere Kanalrohrsystems, an ein Hauptrohr dieses Rohrsystems, mit einem Anschlussstutzen, der im Wanddurchbruch des Basisteils festlegbar ist, wobei der Anschlussstutzen, der einerseits mit einer auf der Außenseite des Basisteils abstützbaren Spanneinrichtung zusammenwirkt, andererseits über eine vorzugsweise formvariable, Zugkräfte übertragende Struktur mit einem formvariablen, unter Zug an die Kontur des inneren Randbereichs des Wanddurchbruchs des Basisteils anschmiegbaren Stützring verbunden ist.

Die Erfindung betrifft ferner einen Stützring, der zum Anschmiegen an jede Art von beliebig konfigurierter Unterlage und dementsprechend für eine Vorrichtung vorstehend genannter Art geeignet ist.

Aus der EP 0 975 914 B1 ist eine Vorrichtung zum dichtschließenden Verbinden eines Kanalrohres mit einem Anschlussrohr bekannt, in das eine Abzweigöffnung einzubringen ist. Die Vorrichtung weist ein Innenteil mit wenigstens einem Gewinde und einem in das Kanalrohr ragenden umlaufenden Bund auf, wobei das Innenteil mit dem Bund voran in der Abzweigöffnung zu positionieren ist. Ferner umfasst die Vorrichtung einen Auflagering mit einem einer Kontur einer Kanalrohraußenfläche angepassten Auflageflansch, ein Einsatzstück mit einem seiner auf die Außenfläche wenigstens teilweise angeordneten Einschraubaußengewinde und einem Spannkranz, das wenigstens teilweise in das Innenteil einzuschrauben ist. Auch umfasst die Vorrichtung ein Ringdichtungselement, das von dem Auflageflansch des Auflagerings und dem umlaufenden Bund wenigstens teilweise gegen eine Kanalrohrinnenfläche und wenigstens teilweise gegen eine Öffnungsfläche der Abzweigöffnung gedrückt ist.

Eine Anordnung oben genannter Art ist aus der EP 2 354 619 A2 bekannt. Bei dieser bekannten Anordnung besteht der Stützring aus einem umlaufenden, aus biegsamem Material bestehenden Tragring, der mit über seinen Umfang verteilten, in radialer Richtung ausstellbaren Stützelementen versehen ist, die verschiebbar oder schwenkbar auf dem Tragring gelagert sind. Dieser mehrteilige Aufbau des Stützrings mit auf einem Tragteil verschiebbar oder verschwenkbar angeordneten Teilen erweist sich als umständlich und störanfällig.

Aus der DE 20 2011 749 U1 ist eine weitere Vorrichtung zum Anschließen eines Seitenrohrs an ein Hauptrohr mit einem in einem Wanddurchbruch des Hauptrohrs festlegbaren Anschlussstutzen bekannt, bei der der mit einer Spanneinrichtung zusammenwirkende Anschlussstutzen mit einem an seinem unteren Ende vorgesehenen, radial auskragenden angeformten Haltekragen versehen ist. Der Haltekragen wird dabei durch umfangsseitig nebeneinander angeordnete, laschenförmige Riegel gebildet, die über ein Filmscharnier mit dem unteren Ende des Anschlussstutzens verbunden sind und die mittels eines in den Anschlussstutzen einführbaren Dorns von einer axialen Streckstellung in eine radiale Haltestellung umklappbar sind. Das untere Ende des Anschlussstutzens und damit auch des hieran angebrachten Haltekragens besitzen über dem Umfang einen dem sinusförmigen Verlauf des inneren Randbereichs des Wanddurchbruchs des Hauptrohrs entsprechenden, sinusförmigen Verlauf. Nur so kann eine satte Anlage des Haltekragens am inneren Randbereich des Wanddurchbruchs des Hauptrohrs erreicht werden. Dies hat allerdings zur Folge, dass der Haltekragen der bekannten Anordnung nur für einen bestimmten Rohrinnendurchmesser des Hauptrohrs passt und dass für Rohre mit unterschiedlichem Innendurchmesser unterschiedliche Anschlussstutzen mit entsprechend gestaltetem Ende benötigt werden. Dies führt zu erhöhten Bereitstellungskosten.

Hiervon ausgehend ist es daher die Aufgabe der vorliegenden Erfindung, eine Vorrichtung eingangs erwähnter Art zu schaffen, die nicht nur einfach und kostengünstig aufgebaut ist, sondern auch eine hohe Funktionssicherheit aufweist und eine universelle Verwendbarkeit für an der Innenseite unterschiedlich konfigurierte Basisteile ermöglicht. Diese Aufgabe wird erfindungsgemäß dadurch gelöst, dass der Stützring als in sich geschlossener Kranz von formvariabel zusammenhängenden, sternförmig angeordneten, radialen Stützlaschen ausgebildet ist, von denen jeweils axiale Halter paarweise abstehen, über welche die Stützlaschen formvariabel zusammenhängen, wobei einander jeweils zugewandte Halter benachbarter Stützlaschen unter Bildung einer inneren Begrenzung eines von den zugeordneten Haltern und Stützlaschen flankierten, umfangsseitig offenen Schlitzes überbrückt sind.

Diese Maßnahmen stellen sicher, dass der Stützring ohne Tragring auskommt und dementsprechend als einheitliches Bauteil hergestellt werden kann.

Dennoch kann der Stützring praktisch jeder Krümmung folgen und dementsprechend an die Innenseite von Rohren mit unterschiedlichem Innendurchmesser exakt angeschmiegt werden. Die erfindungsgemäße Anordnung ist daher nicht auf einen bestimmten Innendurchmesser festgelegt, sondern kann in vorteilhafter Weise universell verwendet werden, was die Herstellung größerer Chargen ermöglicht und die Lagerhaltung vereinfacht. Infolge seiner vom Anschlussstutzen getrennten, formvariablen Bauweise kann der Stützring in vorteilhafter Weise auch ohne Weiteres soweit gestaucht und kontraktiert werden, dass er durch einen zugeordneten Wanddurchbruch des Basisteils durchgeführt werden kann, wobei anschließend eine Zurückfederung in die Ursprungsform erfolgt, was den Montagevorgang äußerst vereinfacht. Die mit der Erfindung erzielbaren Vorteile sind daher insbesondere in einer ausgezeichneten Wirtschaftlichkeit zu sehen.

Vorteilhafte Ausgestaltungen und zweckmäßige Fortbildungen der übergeordneten Maßnahmen sind in den Unteransprüchen angegeben. So kann der Stützring zweckkmäßig doppellagig mit zwei in axialer Richtung einander übergreifenden Lagen von Stützlaschen und zwei in radialer Richtung hintereinander angeordneten Lagen von miteinander verbundenen Haltern ausgebildet sein, wobei die Stützlaschen der einen Lage bezüglich der Stützlaschen der anderen Lage auf Lücke gesetzt sind und wobei die einander zugewandten Halter benachbarter Stützlaschen der einen Lage andererseits zu der hierzu auf Lücke gesetzten Stützlasche der anderen Lage führen und hierdurch überbrückt sind. Hierdurch wird erreicht, dass die Stützlaschen der einen Lage umlaufend über die Halter und die Stützlaschen der anderen Lage zusammenhängen, wobei die von jeder Stützlasche der einen Lage vorzugsweise im Bogen zu jeweils zwei hiergegen versetzten Stützlaschen der anderen Lage führenden Halter praktisch nach oben geschlossene Taschen bilden, in die ein direkt oder indirekt mit dem unteren angebracht sein, die unterhalb des Anschlussstutzens eine an den radial äußeren Halteelementen des Stützrings sich abstützende Einziehung und an ihrem unteren Ende einen nach radial außen vorspringenden Flansch aufweist, der als Dichtung fungiert und von den Stützlaschen des Stützrings untergriffen ist. Die genannten Einziehung bildet praktisch einen Balg, der eine gute Beweglichkeit in radialer und axialer Richtung ermöglicht. Vorteilhaft ist die Gummimuffe unterhalb der Einziehung mit am umlaufenden Halterkranz anliegenden, in Umfangsrichtung voneinander getrennten Nocken versehen, die den unterer Flansch, der als Dichtflansch fungieren soll, in der gewünschten Stellung halten und gleichzeitig eine gewisse Dehnbarkeit in radialer und axialer Richtung ermöglichen.

Zweckmäßig kann die Gummimuffe oberhalb ihres von den Stützlaschen untergriffenen Flansches auch wenigstens eine, vorzugsweise mehrere radial vorspringende Rippen aufweisen, die eine weitere Abdichtung gegenüber der Mantelfläche des zugeordneten Wanddurchbruchs ermöglichen und damit die dort freigelegte Stahlarmierung gegen Zutritt von Feuchtigkeit schützen. Die genannten Rippen bilden daher in erster Linie eine Korrosionsschutzeinrichtung für die freigelegte Stahlamierung. Andererseits können die Rippen auch als Montagehilfe fungieren, indem sie der in den Wanddurchbruch eingesteckten Gummimuffe und dementsprechend auch dem hieran angebrachten Anschlussstutzen infolge der vorhandenen Pressung und Reibung von Anfang an einen provisorischen Halt verleihen.

Eine weitere zweckmäßige Maßnahme kann darin bestehen, dass in den Anschlussstutzen ein als Spreizorgan dienendes Innenrohr einführbar ist, das die formvariable Struktur nach innen abdeckt und mit seinem unteren Endbereich in den Stützring eingreift und verdreh- und verschiebefest hieran abstützbar ist. Durch dieses Spreizorgan werden der beim Durchführen durch den Wanddurchbruch zumindest im in Durchführungsrichtung vorderen Bereich radial gestauchte Stützring und die ebenso gestauchte Gummimuffe nach radial außen gedrückt und dort gehalten, so dass die Stützlaschen und der Dichtflansch in eine zur Achse des Ausschlussstutzens rechtwinklige Lage kommen und dementsprechend im Bereich des Anschlussstutzens zusammenwirkendes Kraftübertragungsorgan eingreifen kann, wodurch die erforderlichen Zugkräfte auf den Stützring übertragen werden können. Dadurch, dass die Stützlaschen der beiden Lagen gegenseitig auf Lücke gesetzt sind, ergibt sich in vorteilhafter Weise eine über dem Umfang geschlossene Stützfläche, was besonders erwünscht ist, wenn sich zwischen dem Stützring und der Innenoberfläche des Basisteils eine aus mehr oder weniger elastischem Material bestehende Dichtung befindet.

Da der formvariable Stützring bei konkav gekrümmter Innenoberfläche des Basisteils ausgehend von einer planen Ausgangsform im Bereich des Scheitels des inneren Randbereichs des zugeordneten Wanddurchbruchs einen weiteren Weg bis zum Erreichen einer satten Wandanlage zurücklegen muss als kempferseitig, ist der Stützring zweckmäßig über eine formvariable Struktur mit dem die erforderlichen Zugkräfte ausübenden Anschlussstutzen verbunden. Die formvariable Struktur kann dabei vorteilhaft als Seilgespanne mit wenigstens einem Zugseil ausgebildet sein, das einerseits durch die Taschen ausgewählter Halter des Stützrings durchgeschlauft und andererseits über am Anschlussstutzen angebrachte, vorzugsweise in einer radialen Erweiterung des Anschlussstutzens positionierte Seilaufnahmen geführt ist. Das Seil kann in vorteilhafter Weise auf den zugeordneten Auflagern gleiten, wodurch sich unter Zug auf einfache Weise die gewünschte Formvariablität ergibt. Außerdem ermöglicht das Seil in vorteilhafter Weise eine gezielte Krafteinleitung in den Stützring, so dass dieser unabhängig von den erforderlichen unterschiedlichen Anstellwegen auf dem ganzen Umfang satt an die zugeordnete Unterlage angelegt werden kann. Im Zusammenhang mit Basisteilen mit konkav gekrümmter Innenoberfläche hat es sich als zweckmäßig erwiesen, wenn die Angriffspunkte jedes Seils am Stützring in dem dem Scheitel zugeordneten Bereich enger beisammen liegen als in den um 90° hiergegen versetzten Kempferbereichen. Generell gilt, dass die Angriffspunkte des Seils dort enger beisammen liegen sollen, wo der Stützring beim Spannen größere Wege zurücklegen muss.

Vorteilhaft kann am unteren Endbereich des Anschlussstutzens eine Gummimuffe Verlauf der durch die auf den Stützring wirkenden Zugkräfte bewerkstelligten Hubbewegung des Stützrings satt zur Anlage am inneren Rand des Wanddurchbruchs kommen. Ein Ausweichen nach radial innen wird durch das Innenrohr verhindert. Durch das Innenrohr werden auch im unteren Mündungsbereich gute Strömungsverhältnisse erreicht und die formvariable Struktur und der Stützring zuverlässig abgeschirmt, so dass Beschädigungen und Verschmutzungen wirksam vorgebeugt ist.

Eine besonders rationelle und kostengünstige Herstellung des Stützrings wird erreicht, wenn diesem ein aus Metallblech oder anderem geeignetem Material bestehender Materialstreifen zugrunde liegt, der beidseitig abwechselnd mit seitlichen, einerseits offenen und andererseits geschlossenen, mit Abstand vom benachbarten Rand endenden Einschnitten versehen ist, wobei die durch die Einschnitte der einen Seite gebildeten Zungen durch die Einschnitte der anderen Seite bis auf eine endseitige Lasche unterteilt werden, die abgekantet wird, und wobei der Materialstreifen, der zueinander komplementäre Enden aufweist, entlang einer gegenüber einer Mittellängsachse um die Materialdicke versetzte Falzlinie gefalzt und durch Verbindung seiner komplementären Enden zu einem Ring geschlossen wird. Hierbei ist es in vorteilhafter Weise möglich, von einem langen Zwischenprodukt einen für einen gewünschten Stützring erforderlichen Abschnitt abzuschneiden und an den Enden zu verbinden. Dies erleichtert die Lagerhaltung.

Weitere vorteilhafte Ausgestaltungen und zweckmäßige Fortbildungen der übergeordneten Maßnahmen sind in den restlichen Ansprüchen angegeben und aus der nachstehenden Beispielsbeschreibung anhand der Zeichnung näher entnehmbar.

In der nachstehend beschriebenen Zeichnung zeigen:
- **Figur 1**: einen Vertikalschnitt durch eine erfindungsgemäße Rohrverbindung,
- **Figur 2**: eine Abwicklung des Stützrings mit zugeordnetem Seilgespanne der Anordnung gemäß Figur 1,
- **Figur 3**: eine perspektivische Ansicht des Stützrings der Anordnung gemäß Figur 1,
- **Figur 4**: einen Abschnitt des Stützrings mit zugeordnetem Zugseil teilweise im Schnitt,
- **Figuren 5 - 8**: verschiedene Herstellungsstufen bei der Herstellung des Stützrings.

Hauptanwendungsgebiet der Erfindung ist der Anschluss von Seitenrohren an Hauptrohren oder andere Basisteile von Kanalsystemen, insbesondere Sanitär- und Abwasserrohrsystemen.

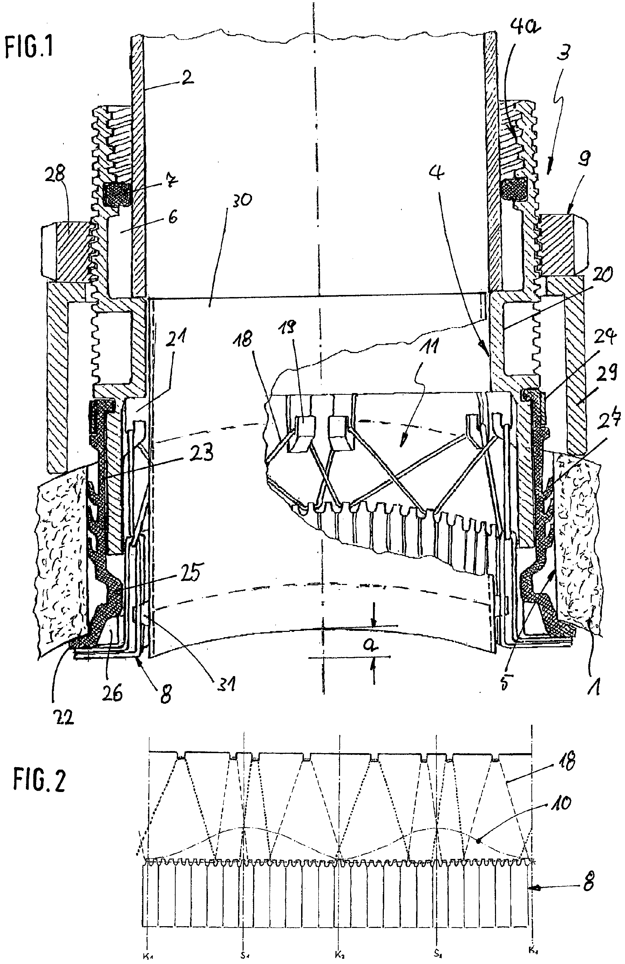

In der der Figur 1 zugrundeliegenden Zusammenstellungszeichnung sind ein Hauptrohr 1 und ein mit diesem verbundenes Seitenrohr 2 eines Kanalsystems angedeutet. Hierzu ist eine Anschlussvorrichtung 3 vorgesehen. Diese enthält einen Anschlussstutzen 4, der mit seinem in Strömungsrichtung vorderen Bereich in einen Wanddurchbruch 5 des Hauptrohrs 1 eingreift und der rückwärtig eine nach hinten offene Kammer 6 zum Einstecken des vorderen Endes des Seitenrohrs 2 aufweist. Dieses kann zweckmäßig mittels einer in der Kammer 6 positionierten Dichtung 7 umlaufend abgedichtet sein. Im der Dichtung 7 endseitig vorgeordneten Bereich ist der Anschlussstutzen 4 mit einem Innengewinde 4a versehen, so dass bei Bedarf eine Stutzenverlängerung eingeschraubt werden kann. Zur hauptrohrseitigen Festlegung des Anschlussstutzens 4 ist dieser gegenüber dem inneren und äußeren Randbereich des Wanddurchbruchs 5 des Hauptrohrs 1 verspannt. Dieses bildet praktisch ein Basisteil, in dessen Wanddurchbruch 5 das Seitenrohr 2 fixierbar ist. Das Basisteil wird dementsprechend im dargestellten Beispiel durch ein Rohr gebildet. Das ist jedoch nicht zwingend. Auch eine mit einem Wanddurchbruch versehene, ebene Wand wie eine Gebäudewand wäre denkbar.

Zur Fixierung des Anschlussstutzens 4 im Wanddurchbruch 5 ist einerseits ein am inneren Randbereich des Wanddurchbruchs 5 abgestützter, mit dem Anschlussstutzen 4 zugkraftübertragend verbundener Stützring 8 und andererseits eine am äußeren Randbereich des Wanddurchbruchs 5 abgestützte, mit dem Anschlussstutzen 5 ziehend zusammenwirkende, d. h. diesen mehr oder weniger aus dem Wanddurchbruch 5 nach oben herausziehende Spanneinrichtung 9 vorgesehen. Der innere Randbereich des Wanddurchbruchs 5 besitzt hier infolge der Krümmung der Innenoberfläche des Hauptrohrs 1 einen über dem Umfang sinusförmigen Verlauf, der in der der Figur 2 zugrunde liegenden Abwicklung durch eine unterbrochene Linie 10 angedeutet ist. An diesen über dem Umfang sinusförmig verlaufenden inneren Randbereich des Wanddurchbruchs 5 des Hauptrohrs 1 soll sich der Stützring 8 satt anschmiegen.

Um dies bei unterschiedlichen Rohrdurchmessern des Hauptrohrs 1 zu ermöglichen ist der Stützring 8 als formvariabler Schmiegering ausgebildet, der sich unter nach oben gerichtetem Zug an jede konkav oder konvex gekrümmte Unterlage anschmiegen kann, d. h. unter elastischer Änderung seiner Form jeder derart gewölbten Auflagefläche beliebig folgen kann.

Dabei muss der Stützring 8 ausgehend von einer planen, der Figur 2 zugrunde liegenden Ausgangsform entsprechend der Sinuslinie 10 im Bereich des Scheitels der dem inneren Randbereich des Wanddurchbruchs 5 des Hauptrohrs 1 zugrunde liegenden Krümmung um eine in Figur 1 angedeutete, größere Strecke a angehoben werden, als in den um 90° hiergegen versetzten, seitlichen Kempferbereichen. In Figur 2 sind die Scheitelbereiche mit S und die Kempferbereiche mit K bezeichnet. Um diese sinusförmige, nach oben gerichtete Auslenkung des Stützrings 8 zu ermöglichen ist dieser zweckmäßig über eine formvariable Struktur, die zur Übertragung von Zugkräften geeignet ist, mit dem nach oben bewegbaren und so praktisch als Zugring fungierenden Anschlussstutzen 4 verbunden. Im dargestellten Beispiel ist die genannte formvariable Struktur als Seilgespanne 11 ausgebildet. Anstelle eines durch das Seilgespanne 11 gebildeten Seilfachwerks könnte natürlich ein Stabfachwerk mit entsprechendem Freiheitsgrad für den Verlauf der Stäbe und die Position der Knoten vorgesehen sein.

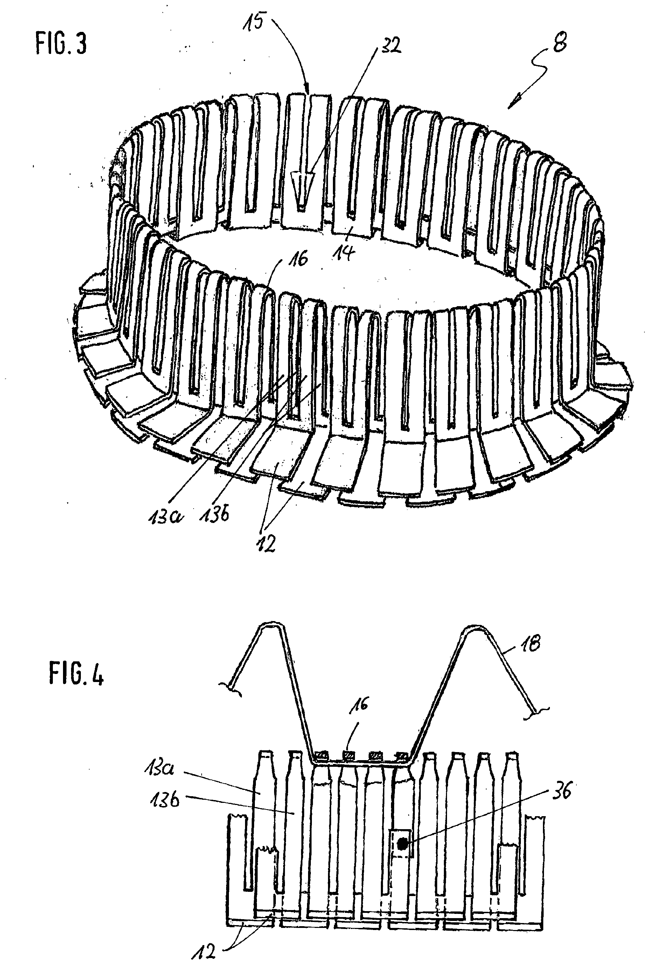

Der formvariable Stützring 8 enthält, wie am besten aus Figur 3 ersichtlich ist, einen umlaufenden Kranz von sternförmig angeordneten, radialen Stützlaschen 12, von denen jeweils zwei Halter 13a, b nach oben, d.h. axial abstehen, die ebenfalls einen umlaufenden Kranz von hier nach Art von Zacken einer Krone nebeneinander angeordneten Haltern bilden und über welche die Stützlaschen 12 formvariabel zusammenhängen. Hierzu sind die einander jeweils zugewandten Halter 13a, b jeweils benachbarter Stützlaschen 12 unter Bildung einer inneren Begrenzung 14 eines durch die betreffenden Halter 13a, b und Stützlaschen 12 flankierten Schlitzes 15 überbrückt. Hierdurch ergibt sich praktisch ein geschlossener Federring, der in axialer Richtung und radialer Richtung auslenkbar ist und dementsprechend die erwünschte sinusförmige Höhenanpassung und eine Formänderung in Durchmesserrichtung ermöglicht.

Der in Figur 3 gezeigte Stützring 8 ist doppellagig ausgebildet. Dementsprechend sind zwei in axialer Richtung übereinander angeordnete Lagen von Stützlaschen 12 sowie zwei in radialer Richtung hintereinander angeordnete Lagen bzw. Kränze von miteinander verbundenen, radial inneren und äußeren Schenkeln der Halter 13a, b vorgesehen, wobei die Stützlaschen 12 der einen Lage bezüglich der Stützlaschen 12 der anderen Lage auf Lücke gesetzt sind und dementsprechend den gegenseitigen Abstand benachbarter Stützlaschen 12 derselben Lage abdecken, und wobei die einander zugewandten Halter 13a, b benachbarter Stützlaschen 12 der einen Lage andererseits zu der hierzu auf Lücke gesetzten Stützlasche 12 der anderen Lage führen und hierdurch überbrückt sind. Die jeweils mit ihren radial äußeren Schenkeln von einer Stützlasche 12 der oberen Lage abstehenden Halter 13a, b führen dementsprechend mit ihren radial inneren Schenkeln zu den zwei seitlich hiergegen versetzten Stützlaschen 12 der unteren Lage und umgekehrt. Dementsprechend hängen alle Stützlaschen 12 beider Lagen über die Halter 13a, b formvariabel zusammen. Die Stütztlaschen 12 der unteren Lage können an ihrer Oberseite im Bereich zwischen den beiden benachbarten Stütztlaschen 12 der oberen Lage plazierte, nach oben gerichtete, hier nicht näher dargestellte Vorsprünge wie Stege, Noppen etc. aufweisen, deren Höhe der Wanddicke der Stützlaschen 12 entspricht, wodurch sichergestellt wird, dass in der Arbeitsstellung auch die Stützlaschen 12 der unteren Lage tragen.

Die Halter 13 a, b können direkt an die betreffenden Stützlaschen 12 anschließen, oder wie im dargestellten Beispiel durch einen Steg verbunden sein, gegenüber dem die Stützlaschen 12 (bei der Ausführung gemäß Figur 3) unter einem vorzugsweise rechten Winkel abgekantet sind und der hier zusammen mit der hier- mit einteilig zusammenhängenden, d.h. hieran angeformten Stützlasche 12 jeweils eine innere Begrenzung 14 bildet. Im ersten oben genannten Fall fungieren die Stützlaschen 12 allein als innere Begrenzungen. Bei einer einfachen Ausführung mit nur einer Stützlaschenlage besteht die innere Begrenzung 14 aus einem Steg zwischen den einander zugewandten Haltern 13 a, b benachbarten Stützlaschen 12.

Die jeweils deckend hintereinander angeordneten Schenkel der Halter 13a, b sind jeweils durch einen oberen Bogen 16 miteinander verbunden. Auf diese Weise ergibt sich, wie am besten aus Figur 4 erkennbar ist, eine nach oben geschlossene Tasche 17, durch die ein die erforderlichen Zugkräfte in den Stützring 8 einleitendes Organ, hier ein Zugseil 18 des Seilgespannes 11, durchgeführt werden kann. Die Gegenkräfte werden vom als Zugring fungierenden Anschlussstutzen 4 aufgenommen, der hierzu mit geeigneten Angriffsorganen für Zugkraftübertragungselemente versehen ist. Im dargestellten Beispiel ist der Anschlussstutzen 4 hierzu, wie Figur 1 anschaulich zeigt, in seinem unteren Bereich mit am Innenumfang vorgesehenen, hakenförmigen Seilaufnahmen 19 versehen, über welche jeweils ein Zugseil 18 des den Stützring 8 und den Anschlussstutzen 4 miteinander verbindenden Seilgespannes 11 geführt werden kann. Der Anschlussstutzen 4 ist im dargestellten Beispiel in seinem mittleren Bereich mit einer radialen Einziehung 20 versehen, unterhalb der sich eine den Seilaufnahmen 19 zugeordnete, radiale Nische 21 ergibt und deren obere Schulter einen Anschlag für das in den Anschlussstutzen 4 eingeführte Seitenrohr 2 bilden kann.

Das Seilgespanne 11 kann ein oder mehrere Seile aufweisen. Zweckmäßig können zwei jeweils einem halben Umfang des Stützrings 8 zugeordnete Seile 18 vorgesehen sein, die an versetzten Positionen am Anschlussstutzen 4 bzw. am Stützring 8 angreifen. Die Seile 18 sind dabei zweckmäßig als endlos umlaufende Schleifen ausgebildet, die voneinander beabstandete Taschen 16 bzw. Gruppen von Taschen 16 durchgreifen und dazwischen über eine Seilaufnahme 19 geführt sind, so dass sich praktisch ein Seilfachwerk der aus Figur 1 entnehmbaren Art ergibt. Da die Seile 18 im Bereich der Taschen 16 und Seilaufnahmen 19 gleiten können, können sich die einzelnen Seilabschnitte verlängern bzw. verkürzen, wodurch die gewünschte Formvariabilität des Seilgespannes 11 erreicht wird.

Um die in der Höhe sinusförmige Verformung des Stützrings 8 zu begünstigen, können die Angriffspunkte jedes Seils 18 am Stützring 8 bzw. dessen Taschen 16 in den dem Scheitel der konkaven Unterlage, an die der Stützring 8 angepresst werden soll, zugeordneten Bereichen, enger beisammen liegen als in den um 90° hierzu versetzten Kempferbereichen.

In einfachen Fällen kann der Stützring 8 direkt an der Innenwand des Hauptrohrs 1 zur Anlage kommen. Im dargestellten Beispiel ist, wie Figur 1 weiter erkennen lässt, eine zwischengeschaltete Dichtung 22 vorgesehen. Hierzu ist eine am Außenumfang des unteren Bereichs des Anschlussstutzens 4 angebrachte Gummimuffe 23 vorgesehen, die über das untere Ende des Anschlussstutzens 4 nach unten vorsteht und an ihrem unteren Ende einen radial nach außen gerichteten, die Dichtung 22 bildenden Flansch aufweist. Die Gummimuffe 23 besteht aus Gummi oder gummiähnlichem Material. Die Gummimuffe 23 ist auf den unteren Endbereich des Anschlussstutzens 4 aufgezogen und zweckmäßig durch einen ihr oberes Ende mit Radialdruck umfassenden Pressring 24 hieran festgelegt. Der Pressring 24 ist von unten über einen radial äußeren Bund der Gummimuffe 23 geschoben, der eine konische Umlauffläche der Gummimuffe begrenzt, mit der der Pressring 24 zusammenwirkt. Im dargestellten Beispiel ist die Gummimuffe 23 zusätzlich an ihrem oberen Ende mit einem nach radial innen auskragenden Bund versehen, der in eine zugeordnete Nut des Anschlussstutzens 4 eingreift.

Dem die Dichtung 22 bildenden Flansch ist eine nach Art eines eine gewisse Beweglichkeit gebenden Balgs wirkende, radiale Einziehung 25 vorgeordnet, deren Einziehtiefe der Wanddicke des unteren Bereichs des Anschlusstutzens 4 entspricht und die dementsprechend an den radial äußeren Schenkeln der Halter 13a, b anliegt. Unterhalb der Einziehung 25 können den die Dichtung 22 tragenden Mantelbereich der Gummimuffe 23 verstärkende Radialnocken 26 vorgesehen sein. Die Radialnocken 26 sind umlaufend mit Abstand nebeneinander angeordnet, wodurch trotz der bewirkten Verstärkung eine gewisse Beweglichkeit des zugeordneten Bereichs der Gummimuffe 23 gegeben ist. Die Einziehung 25 und die Nocken 26 gewährleisten eine zuverlässige Abstützung des unteren Bereichs der Gummimuffe 23 am radial äußeren Umfang der Halter 13a, b und führen dennoch zu einer ausreichenden Verformbarkeit, so dass die Gummimuffe 23 wie der formvariable Stützring 8 trotz des gegenüber dem Durchmesser des Wanddurchbruchs 5 größeren Außendurchmesser unter entsprechender Verformung durch den Wanddurchbruch 5 durchsteckbar ist.

Oberhalb der Einziehung 25 ist die Gummimuffe 23 mit wenigstens einer, vorzugsweise mehreren umlaufenden Lippen bzw. Rippen 27 versehen, die, wie Figur 1 weiter erkennen lässt, mit einer gewissen Vorspannung zur Anlage an der umlaufenden Wand des Wanddurchbruchs 5 des Hauptrohrs 1 kommen. Die Rippen 27 fungieren in erster Linie als Korrosionsschutzeinrichtung durch welche die im Bereich des Mantels des Wanddurchbruchs 5 durchtrennte und damit freigelegte Stahlbewehrung des Hauptrohrs 1 gegen Feuchtigkeitszutritt geschützt wird. Außerdem wird durch die Rippen 27 die in den Wanddurchbruch 5 eingeführte Gummimuffe 23 und damit auch der hiermit verbundene Anschlussstutzen 4 vorläufig fixiert, solange der Stützring 8 noch nicht trägt, was die Montage erleichtern kann.

Der Anschlussstutzen 4 wird in der Regel werksseitig mit dem Stützring 8, der formvariablen Struktur 11 und der Gummimuffe 23 zu einer Baueinheit komplettiert. Bei der Montage wird diese Baueinheit mit dem Stützring 8 voran durch den Wanddurchbruch 5 durchgeführt. Da der Stützring 8 und die Gummimuffe 23 im Bereich des Stützlaschenkranzes und der hiervon untergriffenen Dichtung 22 einen die lichte Weite des Wanddurchbruchs überschreitenden Außendurchmesser aufweisen müssen, erfolgt dabei zwangsläufig eine Stauchung in radialer Richtung. Um diese Stauchung nach erfolgter Einführung rückgängig zu machen ist, wie Figur 1 weiter zeigt, ein in den Anschlussstutzen 4 einführbares, als Spreizorgan fungierendes Innenrohr 30 vorgesehen. Durch dieses wird der gestauchte und entsprechend verformte Stützring 8 so aufgespreizt, dass seine Halter 13a, b etwa axial und seine Stützlaschen 12 etwa radial ausgerichtet sind und auch beim Auftreten von Axial- bzw. Radialkräften in dieser Stellung gehalten werden. Ein Ausweichen nach innen ist somit ausgeschlossen, was eine satte Anlage der Dichtung 22 sowie des Stützlaschenkranzes am zugeordneten Rand des Wanddurchbruchs 5 gewährleistet.

Eine weitere Funktion des Innenrohrs 30 ist, dass es die der formvariablen Struktur zugeordnete Nische 21 nach radial innen verschließt und damit die formvariable Struktur 11 gegen Beschädigungen und Verschmutzungen schützt und dass es, im Mündungsbereich gute Strömungsverhältnisse gewährleistet. Das Innenrohr 30 wird eingesetzt, nachdem die oben genannte Baueinheit in Stellung gebracht ist und bevor die Spanneinrichtung 9 betätigt wird. Die Spanneinrichtung 9 besteht im dargestellten Beispiel aus einem auf ein Außengewinde des Anschlussstutzens 4 aufgeschraubten Spannring 28, der auf einem auf der Außenseite des Hauptrohrs 1 aufstehenden Bock 29 abgestützt ist.

Das Innenrohr 30 ist hier, wie Figur 1 weiter zeigt, mit radial nach außen abstehenden Rastnocken 31 versehen, die jeweils über den Schlitz 15 zwischen den radial inneren Schenkeln der von einer unteren Stützlasche 12 abgehenden Halter 13a, b in eine zugeordnete, in Figur 3 gezeigte Rastausnehmung 32 einführbar sind. Die Rastausnehmung 32 und die Rastnocken 31 sind zweckmäßig pfeilförmig konfiguriert, so dass sich ein Schnappverschluss erreichen lässt, durch den das Innenrohr 30 verschiebe- und verdrehfest am Stützring 8 rastbar ist.

Eine andere Ausführung zur Bildung eines Schnappverschlusses könnte auch darin bestehen, dass das Innenrohr 30 eine umlaufende Sicke und der Stützring 8 im Bereich ausgewählter, hier dem Kempferbereich zugeordneten Halter 13a, b mit rohrseitig vorspringenden, durch ausgeschnittene Zungen gebildeten Rastfedern versehen ist. Generell gilt, dass die Rasteinrichtung den Umfangsbereichen zugeordnet sein soll, in denen der Stützring 8 beim Anziehen der Spanneinrichtung 9 keine nennenswerte Hubbewegung erfährt. Zur Montage wird das Innenrohr 30 von oben eingeführt und niedergedrückt bis die Rasteinrichtung einschnappt. Zum Niederdrücken kann ein lösbar anbringbarer Griff, z. B. in Form eines in das Innnenrohr 30 lösbar einsetzbaren Querstegs Verwendung finden. Das Innenrohr 30 kann am unteren Ende eine entsprechend dem Verlauf des inneren Randbereichs des Wanddurchbruchs 5 konfigurierte, hier sinusförmige Form aufweisen. Die Länge des Innenrohres 30 ist zweckmäßig so, dass es in der der Figur 1 zugrunde liegenden Montagestellung nicht in das Seitenrohr 2 eingreift. Zweckmäßig greift das Innenrohr 30 mit seinem oberen Ende in den durch die Einziehung 20 gebildeten Abschnitt des Anschlussstutzens 4 ein, der hier einen an den Außendurchmesser des Innenrohrs 30 angepassten Innendurchmesser aufweist, wodurch sich eine radiale Führung des Innenrohrs 30 ergibt.

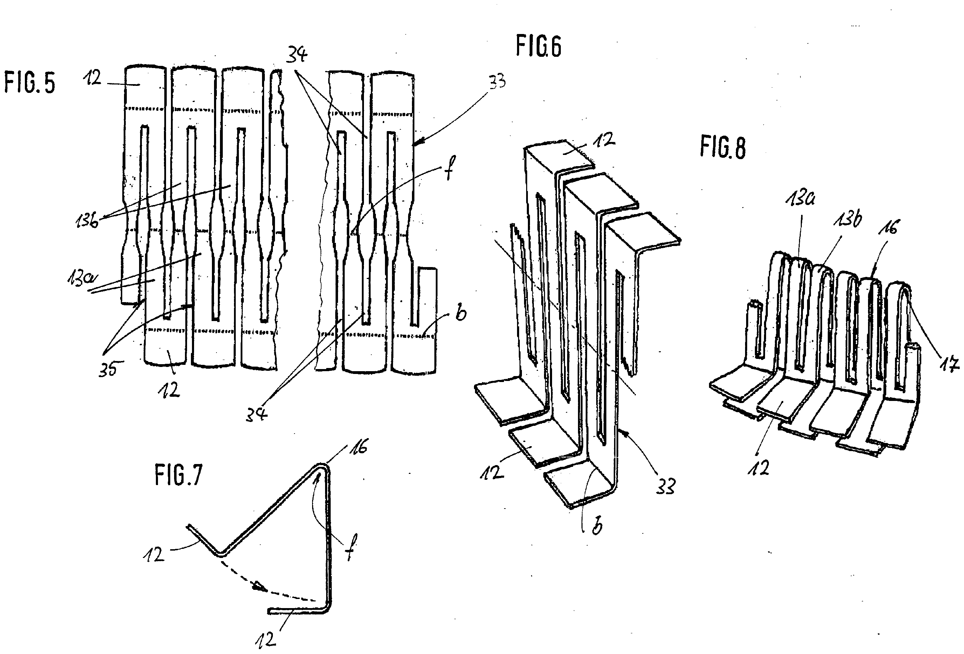

Der Stützring 8 kann zweckmäßig als aus Metall, beispielsweise Stahl bestehender Stanz- und Biegeformling hergestellt werden. Als Ausgangsmaterial kann dabei, wie in Figur 5 angedeutet ist, ein aus dem gewählten Material bestehender Materialstreifen 33 vorgesehen sein, der beidseitig abwechselnd mit seitlichen, einerseits offenen und andererseits geschlossenen, mit Abstand vom benachbarten Rand endenden Einschnitten 34 versehen ist. Durch die aufeinanderfolgenden Einschnitte 34 jeder Seite werden praktisch Zungen 35 gebildet. Die Einschnitte 34 der beiden Seiten sind jeweils um eine halbe Zungenbreite gegeneinander versetzt, so dass die Zungen 35 der einen Seite durch die Einschnitte 34 der anderen Seite jeweils bis auf eine endseitige Lasche in zwei parallele Zweige unterteilt werden. Durch die genannten Laschen werden die später benötigten Stützlaschen 12 und durch die hiervon abgehenden Zweige die Halter 13a, b vorbereitet.

Anschließend werden die zur Bildung der Stützlaschen 12 vorgesehenen Enden der Zungen 35 gemäß einer in Figur 5 punktiert eingetragenen Biegelinie b umgebogen.

Dieser Biegevorgang erfolgt gemäß Figur 6 so, dass sich die Laschen der beiden Seiten gegenläufig vom Materialstreifen 33 weg erstrecken. Der Abkantwinkel kann 90° betragen. Anschließend erfolgt ein in Figur 7 angedeuteter Falzvorgang, um eine in Figur 5 ebenfalls angedeutete Falzlinie f. Diese ist gegenüber einer Mittellängsachse zumindest um die Materialdicke des Materialstreifens 33 seitlich versetzt, so dass die die Stützlaschen 12 bildenden Laschen der beiden Seiten in zwei Lagen übereinander zu liegen kommen, wobei die Stützlaschen 12 der beiden Lagen, wie Figur 8 anschaulich zeigt, infolge des seitlichen Versatzes der Zungen 35 der beiden Seiten des Materialstreifens 3 gegeneinander auf Lücke gesetzt und durch die von einer Stützlasche 12 abstehenden Halter 13a, b mit den beiden hiergegen versetzten Stützlaschen der jeweils anderen Lage formvariabel verbunden sind. Die jeweils mit ihren radial äußeren Schenkeln von einer Stützlasche 12 der oberen Stützlaschenlage abgehenden Halter 13a, b führen dabei mit ihren radial inneren Schenkeln zu den zwei gegenüber der genannten Stützlasche 12 der oberen Lage seitlich versetzten Stützlaschen 12 der unteren Stützlaschenlage und bilden dementsprechend jeweils einen von diesen abgehenden Halter 13b bzw. 13a.

Anschließend wird der so gestanzte, abgekantete und gefalzte Materialstreifen 33 bzw. ein geeigneter Abschnitt hiervon zu einem Ring gebogen und mit seinen Enden verbunden. Die Enden des Materialstreifens 33 bzw. Streifenabschnitts sind dabei jeweils gemäß Figur 5 komplementär, so dass an der Stoßstelle eine Schweißverbindung erfolgen kann, wie in Figur 4 durch einen Schweißpunkt 36 angedeutet ist. Komplementär bedeutet dementsprechend, dass die Enden entweder stumpf aneinander anschließen oder sich etwas überlappen, was die Schweißverbindung vereinfacht.

## Patentansprüche

1. Stützring, der zum Anschmiegen an eine vorzugsweise unebene, z. B. konvex gewölbte Unterlage geeignet ist, wobei der Stützring (8) als in sich geschlossener Kranz von formvariabel zusammenhängenden, sternförmig angeordneten, radialen Stützlaschen (12) ausgebildet ist, **dadurch gekennzeichnet, dass** von den Stützlaschen jeweils axiale Halter (13a, b) paarweise abstehen, über welche die Stützlaschen (12) formvariabel zusammenhängen, wobei einander jeweils zugewandte Halter (13a, b) benachbarter Stützlaschen (12) unter Bildung einer inneren Begrenzung (14) eines von den zugeordneten Haltern (13a, b) und Stützlaschen (12) flankierten, umfangsseitig offenen Schlitzes (15) überbrückt sind.

2. Stützring nach Anspruch 1, **dadurch gekennzeichnet, dass** er aus einem Materialstreifen (33) besteht, der beidseitig abwechselnd mit seitlichen, einerseits offenen und andererseits geschlossenen, mit Abstand vom benachbarten Rand endenden Einschnitten (34) versehen ist, wobei die durch die Einschnitte (34) der einen Seite gebildeten Zungen (35) durch die Einschnitte (34) der anderen Seite bis auf eine endseitige Lasche unterteilt sind, die unter einem vorzugsweise rechten Winkel abgekantet ist und wobei der Materialstreifen (33), der zueinander komplementäre Enden aufweist, entlang einer gegenüber der Mittellängsachse zumindest um die Materialdicke seitlich versetzten Falzlinie gefalzt und durch Verbindung seiner komplementären Enden zu einem Ring geschlossen ist.

3. Stützring nach Anspruch 2, **dadurch gekennzeichnet, dass** er als aus Blech bestehender Stanz- und Biegeformling ausgebildet ist.

4. Vorrichtung zur Fixierung eines Rohres in einem zugeordneten Wanddurchbruch (5) eines Basisteils, vorzugsweise zum Anschließen eines Seitenrohrs (2) eines Rohrsystems, insbesondere Kanalrohrsystems, an ein Hauptrohr (1) dieses Rohrsystems, mit einem Anschlussstutzen (4), der in einem Wanddurchbruch (5) des Basisteils festlegbar ist, wobei der Anschlussstutzen (4), der einerseits mit einer auf der Außenseite des Hauptrohrs (1) abstützbaren Spanneinrichtung (9) zusammenwirkt, andererseits über eine vorzugsweise formvariable, Zugkräfte übertragende Struktur mit einem formvariablen, unter Zug an die Kontur des inneren Randbereichs des Wanddurchbruchs (5) des Basisteils anschmiegbaren Stützring (8) verbunden ist, **dadurch gekennzeichnet, dass** der Stützring (8) nach einem oder mehreren der vorherigen Ansprüche ausgebildet ist.

5. Vorrichtung nach Anspruch 4, **dadurch gekennzeichnet, dass** der Stützring (8) doppellagig ausgebildet ist und zwei in axialer Richtung einander übergreifende Lagen von Stützlaschen (12), sowie zwei in radialer Richtung hintereinander angeordnete Lagen von miteinander verbundenen Haltern (13a, b) aufweist, wobei die Stützlaschen (12) der einen Lage bezüglich der Stützlaschen (12) der anderen Lage auf Lücke gesetzt sind und wobei die einander zugewandten Halter (13a, b) benachbarter Stützlaschen (12) der einen Lage andererseits zu der hierzu auf Lücke gesetzten Stützlasche (12) der anderen Lage führen und hierdurch überbrückt sind.

6. Vorrichtung nach Anspruch 5, **dadurch gekennzeichnet, dass** die einander jeweils hintergreifenden, von den Stützlaschen (12) der beiden Lagen jeweils abgehenden Halter (13a, b) in Form eines Bogens (16) ineinander übergehen, der eine Tasche (17) zur Aufnahme eines durchführbaren Kraftübertragungsorgans bildet.

7. Vorrichtung nach Anspruch 6, **dadurch gekennzeichnet, dass** die Zugkräfte übertragende, formvariable Struktur als Seilgespanne (11) mit wenigstens einem Zugseil (18) ausgebildet ist, das einerseits durch die Taschen (17) ausgewählter Halter (13a, b) durchgeschlauft und andererseits über an der Innenseite, vorzugsweise im Bereich einer zugeordneten radialen Nische (21) des Anschlussstutzens (4) angeordnete Seilaufnahmen (19) geführt ist.

8. Vorrichtung nach Anspruch 7, **dadurch gekennzeichnet, dass** das Seilgespanne (11) mehrere, vorzugsweise zwei Zugseile (18) aufweist, die an verschiedenen, am Umfang des Stützrings (8) gegeneinander versetzten Haltern (13a, b) bzw. Gruppen von Haltern (13a, b) angreifen.

9. Vorrichtung nach einem der Ansprüche 7 oder 8, **dadurch gekennzeichnet, dass** die Angriffspunkte jedes Seils (18) am Stützring (8) im Bereich des Scheitels des an die Kontur des inneren Randbereichs des Wanddurchbruchs (5) des Hauptrohrs (1) angeschmiegten Stützrings (8) enger beisammen liegen als in um 90° hiergegen versetzten Bereichen.

10. Vorrichtung nach einem der vorhergehenden Ansprüche, **dadurch gekennzeichnet, dass** am unteren Endbereich des Anschlussstutzens (4) eine Gummimuffe (23) angebracht ist, die unterhalb des Anschlussstutzens (4) eine an den radial äußeren Schenkeln der Halter (13a, b) sich abstützende Einziehung (25) und an ihrem unteren Ende einen radial vorspringenden Flansch (22) aufweist, der von den Stützlaschen (12) des Stützrings (8) Untergriffen ist.

11. Vorrichtung nach Anspruch 10, **dadurch gekennzeichnet, dass** die Gummimuffe (23) oberhalb ihres Flansches (22) eine, vorzugsweise mehrere radial vorspringende Rippen oder Lippen (27) aufweist.

12. Vorrichtung nach einem der vorhergehenden Ansprüche, **dadurch gekennzeichnet, dass** in den Anschlussstutzen (4) ein Innenrohr (30) einführbar ist, das die Verbindung zwischen Anschlussstutzen (4) und Stützring (8) nach innen abschirmt und mit seinem unteren Endbereich in den Stützring (8) eingreift und diesen aufgespreizt und in einer aufgespreizten Form hält.

13. Vorrichtung nach Anspruch 12, **dadurch gekennzeichnet, dass** das Innenrohr (30) durch eine Rastverbindung am Stützring (8) festlegbar ist, deren Rastelemente vorzugsweise gegenüber dem Scheitelbereich des an den inneren Randbereich des Wanddurchbruchs (5) eines Hauptrohrs (1) angeschmiegten Stützrings (8) um 90° versetzt sind.

14. Vorrichtung nach einem der vorhergehenden Ansprüche, **dadurch gekennzeichnet, dass** der Anschlussstutzen (4) mit einem Außengewinde für einen mit einem auf der Außenseite des Hauptrohrs (1) sich abstützenden Bock (29) zusammenwirkenden Spannring (28) und vorzugsweise einem Innengewinde für eine rückwärtige Stutzenverlängerung versehen ist.

## Claims

1. A support ring suitable for conforming to a preferably uneven, for example convexly curved base, the support ring (8) being implemented as a closed annulus of contiguous and variably shaped radial support tabs (12) disposed in a star shape, **characterized in that**, axial holders (13a, b) protrude from the support tabs in pairs, by means of which the support tabs (12) are contiguous and variably shaped, wherein holders (13a, b) facing each other of adjacent support tabs (12) are bridged, forming an inner boundary (14) of a circumferentially open slit (15) flanked by the associated holders (13a, b) and support tabs (12).

2. The support ring according to claim 1, **characterized in that**, said ring is made of a material strip (33) having lateral cut-out regions (34) open on one side and closed on the other, alternately on both sides, ending spaced apart from the adjacent edge, wherein the tongues (35) formed by the cut-out regions (34) of the one side are subdivided by the cut-out regions (34) of the other side, except for one end tab folded at a preferably right angle, and wherein the material strip (33), comprising ends complementary to each other, is folded along a fold line offset laterally relative to the center longitudinal axis at least by the material thickness, and closed into a ring by connecting the complementary ends thereof.

3. The support ring according to claim 2, **characterized in that**, said ring is implemented as a punched and bent blank made of sheet metal.

4. A device for fixing a pipe in an associated wall penetration (5) of a base part, preferably for connecting a side pipe (2) of a pipework system, particularly a sewer pipe system, to a main pipe (1) of said pipe system, having a pipe union (4) for fixing in a wall penetration (5) of the base part, the pipe union (4), interacting on one side with a clamping device (9) for supporting on the outside of the main pipe (1), and connected on the other side to a variably shaped support ring (8) for conforming to the contour of the inner edge region of the wall penetration (5) of the base under tension by means of a preferably variably shaped structure for transmitting tensile forces, **characterized in that**, the support ring (8) is implemented according to any one or more of the preceding claims.

5. The device according to claim 4, **characterized in that**, the support ring (8) is implemented having double layers and comprises two layers of support tabs (12) overlapping each other in the axial direction and two layers of holders (13a, b) connected to each other and disposed one behind the other in the radial direction, wherein the support tabs (12) of the one layer are staggered with respect to the support tabs (12) of the other layer, and wherein the holders (13a, b) facing each other of adjacent support tabs (12) of the one layer lead to the support tabs (12) of the other layer staggered relative thereto, and are thereby overlapped.

6. The device according to claim 5, **characterized in that**, the holders (13a, b) overlapping each other and protruding from the support tabs (12) of the two layers transition into each other in the form of an arch (16), forming a pocket (17) for receiving a force transmitting organ for feeding through.

7. The device according to claim 6, **characterized in that**, the variably shaped structure transmitting tensile forces is implemented as a cable harness (11) having at least one tensile stay (18) looped through the pockets (17) of selected holders (13a, b) on one side and guided by means of cable hooks (19) preferably disposed in the region of an associated radial niche (21) of the pipe union (4).

8. The device according to claim 7, **characterized in that**, the cable harness (11) comprises a plurality of, preferably two, tensile cables (18) engaging in various holders (13a, b) or groups of holders (13a, b) offset relative to each other on the circumference of the support ring (8).

9. The device according to any one of the claims 7 or 8, **characterized in that**, the points of application of each cable (18) on the support ring (8) lie closer together in the region of the saddle of the support ring (8) conforming to the contour of the inner edge region of the wall penetration (5) of the main pipe (1) than in regions relatively offset by 90°.

10. The device according to any one of the preceding claims, **characterized in that**, a rubber bushing (23) is applied at the lower end region of the pipe union (4) and comprises a narrowing (25) supported on the radially outer legs of the holder (13a, b) below the pipe union (4) and comprises a radially protruding flange (22) on the bottom end thereof undercut by the support tabs (12) of the support ring (8).

11. The device according to claim 10, **characterized in that**, the rubber bushing (23) comprises one, preferably a plurality of radially protruding ribs or lips (27) above the flange (22) thereof.

12. The device according to any one of the preceding claims, **characterized in that**, an inner pipe (30) can be inserted into the pipe union (4) and inwardly shields the connection between the pipe union (4) and the support ring (8), and the bottom end region thereof engages in the support ring (8) and spreads the ring open and retains the ring in a spread open shape.

13. The device according to claim 12, **characterized in that**, the inner pipe (30) can be fixed to the support ring (8) by means of a latch connection, the latching element thereof preferably being offset by 90° relative to the saddle region of the support ring (8) conforming to the inner edge region of the wall penetration (5) of a main pipe (1).

14. The device according to any one of the preceding claims, **characterized in that**, the pipe union (4) has an external thread for a clamp ring (28) having a trestle (29) supported on the outside of the main pipe (1) and preferably has an internal thread for a rear socket extension.

## Revendications

1. Bague de support, qui est appropriée pour se presser sur un support de préférence inégal, par ex. bombé convexe, la bague de support (8) se présentant sous la forme d'une couronne fermée sur elle-même, constituée de languettes de support (12) agencées les unes par rapport aux autres de manière variable en forme et disposées en étoile, **caractérisée en ce que** des supports axiaux (13a, b) font respectivement saillie en paires sur les languettes de support, par l'intermédiaire desquels les languettes de support (12) sont agencées les unes par rapport aux autres de manière variable en forme, sachant que des supports (13a, b) de languettes de support (12) adjacentes, se faisant face respectivement, sont pontés en formant une limite intérieure (14) d'une fente (15) qui est flanquée par les supports (13a, b) associés et les languettes de support (12) et est ouverte sur le côté périphérique.

2. Bague de support selon la revendication 1, **caractérisée en ce qu'**elle est constituée d'une bande de matériau (33) qui est munie sur les deux côtés, en alternance, d'incisions latérales (34) ouvertes d'une part et fermées d'autre part et se terminant à distance du bord adjacent, sachant que les languettes (35) formées par les incisions (34) d'un côté sont subdivisées par les incisions (34) de l'autre côté sauf pour une languette du côté d'extrémité, qui est coudée de préférence à angle droit et sachant que la bande de matériau (33), qui présente des extrémités complémentaires l'une de l'autre, est pliée le long d'une ligne de pliage décalée latéralement par rapport à l'axe longitudinal central d'au moins l'épaisseur du matériau et est fermée en une bague par reliage de ses extrémités complémentaires.

3. Bague de support selon la revendication 2, **caractérisée en ce qu'**elle se présente sous la forme d'une pièce en tôle formée par estampage et cintrage.

4. Dispositif pour fixer un tube dans une percée murale (5) associée d'une partie de base, de préférence pour raccorder un tube latéral (2) d'un système de tubes, en particulier un système de tubes de canalisation, à un tube principal (1) de ce système de tubes, avec une tubulure de raccordement (4) qui peut être fixée dans une percée murale (5) de la partie de base, la tubulure de raccordement (4), qui, d'une part, coopère avec un dispositif de serrage (9) pouvant être supporté sur le côté extérieur du tube principal (1) et, d'autre part, est relié via une structure de préférence à forme variable, transmettant les forces de traction, avec une bague de support (8) à forme variable pouvant être pressée sous tension contre le contour de la zone du bord intérieure de la percée murale (5) de la partie de base, **caractérisé en ce que** la bague de support (8) se présente sous une forme selon l'une ou plusieurs des revendications précédentes.

5. Dispositif selon la revendication 4, **caractérisé en ce que** la bague de support (8) est réalisé en deux couches et présente deux couches de languettes de support (12) se chevauchant dans la direction axiale ainsi que deux couches de supports (13a, b) reliés les uns avec les autres, disposées l'une derrière l'autre dans la direction radiale, dans lequel les languettes de support (12) d'une couche sont réglées de manière à s'écarter des languettes de support (12) de l'autre couche, et dans lequel les supports (13a, b) se faisant face mutuellement de languettes de support (12) adjacentes d'une couche, d'autre part, conduisent vers la languette de support (12) de l'autre couche, qui est réglée pour s'en écarter, et sont ainsi pontés.

6. Dispositif selon la revendication 5, **caractérisé en ce que** les supports (13a, b) qui s'engagent respectivement les uns derrière les autres et font saillie respectivement sur les languettes de support (12) des deux couches se prolongent l'un dans l'autre sous la forme d'un arc (16) qui forme une poche (17) pour recevoir un organe de transmission de force pouvant y être introduit.

7. Dispositif selon la revendication 6, **caractérisé en ce que** la structure à forme variable transmettant les forces de traction se présente sous la forme d'un ensemble de câbles tendus (11) avec au moins un câble de traction (18) qui, d'une part, est bouclé à travers les poches (17) de supports (13a, b) sélectionnés et, d'autre part, est posé par des logements (19) de câbles disposés sur le côté intérieur, de préférence dans la zone d'une niche radiale (21) associée de la tubulure de raccordement (4).

8. Dispositif selon la revendication 7, **caractérisé en ce que** l'ensemble de câbles tendus (11) présente plusieurs, de préférence deux câbles de traction (18) qui viennent en prise sur différents supports (13a, b) ou groupes de supports (13a, b) décalés les uns par rapport aux autres sur la circonférence de la bague de support (8).

9. Dispositif selon l'une des revendications 7 ou 8, **caractérisé en ce que** les points d'attaque de chaque câble (18) sur la bague de support (8) sont plus proches l'un de l'autre dans la zone du sommet de la bague de support (8) pressée contre le contour de la zone du bord intérieure de la percée murale (5) du tube principal (1) que dans les zones décalées de 90° par rapport à cette zone.

10. Dispositif selon l'une des revendications précédentes, **caractérisé en ce qu'**un manchon en caoutchouc (23) est fixé à la zone d'extrémité inférieure de la tubulure de raccordement (4), lequel manchon présente sous la tubulure de raccordement (4) un retrait (25) qui s'appuie sur les branches radialement extérieures des supports (13a, b) et, à son extrémité inférieure, une bride (22) faisant saillie radialement qui est engagée par le bas par les languettes de support (12) de la bague de support (8).

11. Dispositif selon la revendication 10, **caractérisé en ce que** le manchon en caoutchouc (23) présente au-dessus de sa bride (22) une, de préférence plusieurs nervures ou lèvres (27) faisant saillie radialement.

12. Dispositif selon l'une des revendications précédentes, **caractérisé en ce qu'**un tube intérieur (30) peut être introduit dans la tubulure de raccordement (4), lequel tube intérieur boucle vers l'intérieur la liaison entre la tubulure de raccordement (4) et la bague de support (8) et s'engage par sa zone d'extrémité inférieure dans la bague de support (8), l'écarte et la tient écartée.

13. Dispositif selon la revendication 12, **caractérisé en ce que** le tube intérieur (30) peut être fixé à la bague de support (8) par une liaison à encliquetage, dont les éléments d'encliquetage sont de préférence décalés de 90° par rapport à la zone de sommet de la bague de support (8) pressée contre la zone de bord intérieure de la percée murale (5) d'un tube principal (1).

14. Dispositif selon l'une des revendications précédentes, **caractérisé en ce que** la tubulure de raccordement (4) est pourvue d'un filetage extérieur pour une bague de serrage (28) coopérant avec un chevalet (29) supporté sur le côté extérieur du tube principal (1) et, de préférence, d'un filetage intérieur pour un prolongement arrière de la tubulure de raccordement.
